# EUROPEAN PATENT SPECIFICATION

(11) **EP 4 273 978 B1**
(45) Date of publication and mention of the grant of the patent: **19.11.2025**
(21) Application number: 22767453.8
(22) Date of filing: 07.03.2022
(51) Int. Cl.: H01M 8/04746, H01M 8/0432, H01M 8/04119, B01D 63/02, H01M 8/04, H01M 8/10

(54) **FUEL CELL SYSTEM CAPABLE OF ADJUSTING BYPASS FLOW RATE**
BRENNSTOFFZELLENSYSTEM MIT MÖGLICHKEIT ZUR EINSTELLUNG DER BYPASS-FLUSSRATE
SYSTÈME DE PILE À COMBUSTIBLE CAPABLE D'AJUSTER UN DÉBIT DE DÉRIVATION

(30) Priority: 09.03.2021 KR 20210030626
(43) Date of publication of application: 08.11.2023
(73) Proprietor: Kolon Industries, Inc., Seoul 07793 (KR)
(72) Inventor: OH, Young Seok, Seoul 07793 (KR); LEE, Ah Reum, Seoul 07793 (KR); LEE, Ji Yoon, Seoul 07793 (KR); KIM, Kyoung Ju, Seoul 07793 (KR)
(74) Representative: Vossius & Partner Patentanwälte Rechtsanwälte mbB
(86) International application number: PCT/KR2022/003223
(87) International publication number: WO 2022/191557

(56) References cited:
- EP-A1- 3 115 726
- EP-A2- 1 469 546
- WO-A1-2019/168841
- CN-A- 110 828 859
- CN-A- 112 397 750
- DE-A1- 102008 050 846
- JP-A- 2006 120 340
- JP-A- 2008 027 674
- JP-A- 2008 303 128
- JP-A- 2010 192 292
- KR-A- 20100 074 835
- KR-A- 20200 122 260
- KR-A- 20200 122 260
- US-A1- 2001 010 875
- US-A1- 2010 009 226
- US-A1- 2012 251 900
- US-A1- 2016 146 075
- US-B2- 8 839 748

## Description

The present invention relates to a fuel cell system, and more particularly, to a fuel cell system capable of adjusting a bypass flow rate that is capable of automatically adjusting a bypass flow rate depending on a temperature of an off-gas discharged from a fuel cell stack.

### Background Art

Fuel cells are power generation cells that produce electricity through coupling between hydrogen and oxygen. The fuel cells have an advantage of being able to continuously produce electricity as long as the hydrogen and the oxygen are supplied, and having an efficiency that is about twice higher than an internal combustion engine because of no heat loss, unlike general chemical cells such as dry batteries or storage batteries.

Further, since chemical energy generated through coupling between the hydrogen and the oxygen is directly converted into electrical energy, emission of pollutants is reduced. Therefore, the fuel cells have an advantage of being environmentally friendly and being able to reduce concerns about resource depletion due to increased energy consumption.

These fuel cells are roughly classified into, for example, a polymer electrolyte membrane fuel cell (PEMFC), a phosphoric acid fuel cell (PAFC), a molten carbonate fuel cell (MCFC), a solid oxide fuel cell (SOFC), and an alkaline fuel cell (AFC) depending on a type of electrolyte used.

These fuel cells fundamentally operate according to the same principle, but have a difference in a type of fuel used, an operating temperature, a catalyst, an electrolyte, or the like. Among the cells, the polymer electrolyte membrane fuel cell (PEMFC) is known to be the most promising not only for small-scale stationary power generation equipment but also for transportation systems because the polymer electrolyte membrane fuel cell operates at a lower temperature than other fuel cells and can be miniaturized due to a high output density.

One of the most important factors in improving the performance of the polymer electrolyte membrane fuel cell (PEMFC) is to maintain moisture content by supplying a certain amount or more of moisture to a polymer electrolyte membrane (or proton exchange membrane: PEM) of a membrane electrode assembly (MEA). This is because the efficiency of power generation is rapidly degraded when the polymer electrolyte membrane is dried.

Examples of a method for humidifying the polymer electrolyte membrane include 1) a bubbler humidification scheme for filling a pressure-resistant container with water and then passing a target gas through a diffuser to supply moisture, 2) a direct injection scheme for calculating a moisture supply amount required for a fuel cell reaction and directly supplying moisture to a gas flow pipe through a solenoid valve, and 3) a humidification membrane scheme for supplying moisture to a fluidized gas layer using a polymer separation membrane.

Among these, the membrane humidification scheme for humidifying a polymer electrolyte membrane by providing water vapor to air supplied to the polymer electrolyte membrane using a membrane that selectively permeates only water vapor contained in an off-gas is advantageous in that a weight and size of a humidifier can be reduced.

A selective permeable membrane used in the membrane humidification scheme is preferably a hollow fiber membrane having a large permeable area per unit volume when a module is formed. That is, when a humidifier is manufactured using hollow fiber membranes, there are advantages that high integration of the hollow fiber membranes with a large contact surface area is possible so that a fuel cell can be sufficiently humidified even with a small capacity, low-cost materials can be used, and moisture and heat contained in an off-gas discharged with a high temperature from the fuel cell can be recovered and can be reused through the humidifier.

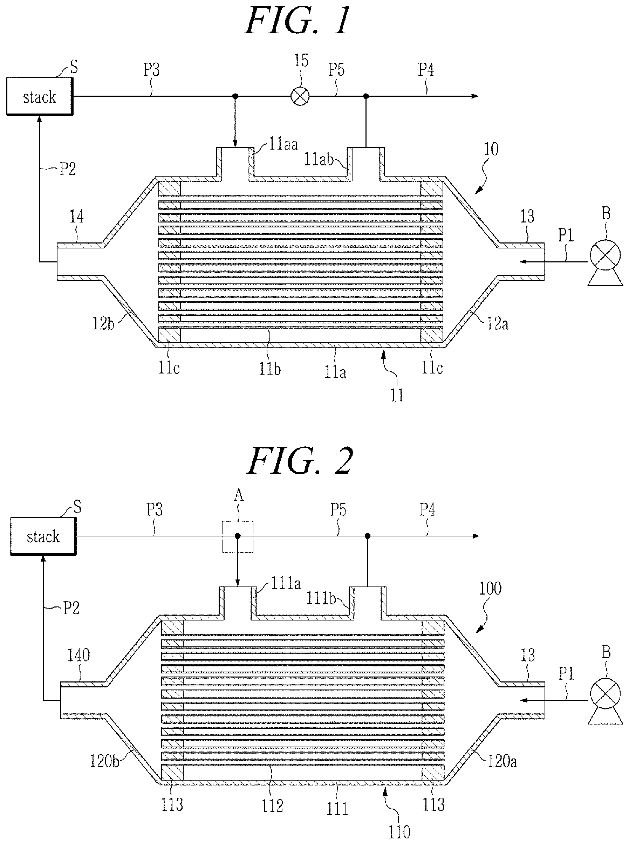

FIG. 1 is a diagram illustrating a fuel cell system according to the related art.

As illustrated in FIG. 1, the fuel cell system of the related art includes a blower B, a membrane humidifier 10, a fuel cell stack S, flow paths P1 to P5 that connect these, and an adjustment valve 15. P1 denotes a dry gas supply flow path that connects the blower B to the membrane humidifier 10, and P2 denotes a stack flow path that connects the membrane humidifier 10 to the fuel cell stack S and supplies a humidified dry gas. P3 denotes an off-gas inflow flow path that supplies an off-gas discharged from the fuel cell stack S to the membrane humidifier 10, and P4 denotes an off-gas discharge flow path that discharges the off-gas flowing into the membrane humidifier 10 and performing moisture exchange to the outside. P5 denotes a bypass flow path that causes a part of the off-gas discharged from the fuel cell stack S to flow to the off-gas discharge flow path P4 by bypassing the membrane humidifier 10. Here, 'connect' includes not only "direct connection", but also "indirect connection with another part interposed therebetween".

The membrane humidifier 10 includes a humidification module 11 in which moisture exchange occurs between a dry gas supplied from the blower B and wetting air (off-gas) discharged from the fuel cell stack S, and caps 12 (12a and 12b) coupled to both ends of the humidification module 11.

A dry gas inlet 130 is formed in one cap 12a between the caps 12 to supply the dry gas supplied from the blower B to the humidification module 11, and a dry gas outlet 14 is formed in the other cap 12b to supply the air humidified by the humidification module 11 to the fuel cell stack S.

The humidification module 11 includes a mid-case 11a having an off-gas inlet 11aa and an off-gas outlet 11ab, and a plurality of hollow fiber membranes 11b in the mid-case 11a. Both ends of a bundle of hollow fiber membranes 11b are fixed to potting portions 11c. The potting portions 11c are generally formed by curing a liquid polymer such as a liquid polyurethane resin through a casting scheme.

The dry gas supplied from the blower B flows along hollows of the hollow fiber membranes 11b. The off-gas flowing into the mid-case 11a through the off-gas inlet 11aa comes into contact with outer surfaces of the hollow fiber membranes 11b, and then, is discharged from the mid-case 11a through the off-gas outlet 11ab. When the off-gas comes into contact with the outer surfaces of the hollow fiber membranes 11b, moisture contained in the off-gas permeates the hollow fiber membranes 11b to humidify the dry gas flowing along the hollows of the hollow fiber membranes 11b.

Inner spaces of the caps 12 are in fluid communication only with the hollows of the hollow fiber membranes 11b, and should be completely blocked from an inner space of the mid-case 11a. Otherwise, air leakage occurs due to a pressure difference, an amount of humidified air supplied to the fuel cell stack is reduced, and efficiency of power generation of the fuel cell is degraded.

Meanwhile, a part of the off-gas discharged from the fuel cell stack S and supplied to the membrane humidifier 10 joins the off-gas discharge flow path P4 and is discharged to the outside by bypassing the membrane humidifier 10 through the bypass flow chart P5, according to needs of control of an output value of the system and adjustment of a degree of pollution of an external off-gas.

In this case, a bypass flow rate bypassing through the bypass flow path P5 is adjusted by the adjustment valve 15 installed on the bypass flow path P5. A degree of opening and closing of the adjustment valve 15 may be determined under the control of a controller (not illustrated). Since such an adjustment valve 15 should include, for example, a valve plate that is opened or closed by pivoting, and an adjustment tool that adjusts an opening and closing angle of the valve plate depending on to a manipulation of a user or a signal from a controller, there is a disadvantage in that a cost increases and the fuel cell system becomes complicated due to an increased number of parts. JP 2006 120340 A and JP 2008 027674 A each disclose a bypass flow rate adjustment portion formed in a bypass flow path which is configured to adjust a degree of opening of the bypass flow path depending on a temperature of the off-gas discharged from a fuel cell. In JP 2006 120340 A the flow rate adjustment portion is a valve controlled depending on temperature measured by a separate sensor. In JP 2008 027674 a control unit adjusts the degree of opening of the valve depending on the temperature of the exhaust gas compared with a predetermined temperature.

EP 3 115 726 A1, US 2016/146075 A and US 8 839 748 B2 each disclose valve units that contract at lower temperatures and expand at higher temperatures.

WO 2019/168841 A1 teaches a bypass control ring formed in a ring shape which expands on heating.

### Disclosure

### Technical Problem

An object of the present invention is to provide a fuel cell system capable of adjusting a bypass flow rate, which can automatically adjust the bypass flow rate depending on a temperature of an off-gas discharged from a fuel cell stack.

### Technical Solution

A fuel cell system capable of adjusting a bypass flow rate according to an embodiment of the present invention includes
an off-gas inflow flow path configured to supply at least a part of an off-gas discharged from a fuel cell stack to a membrane humidifier; an off-gas discharge flow path configured to discharge the off-gas flowing into the membrane humidifier and performing moisture exchange to the outside; a bypass flow path configured to causing at least a part of the off-gas discharged from the fuel cell stack to flow to the off-gas discharge flow path by bypassing the membrane humidifier; and a bypass flow rate adjustment portion formed in the bypass flow path and configured to adjust a degree of opening of the bypass flow path depending on a temperature of the off-gas discharged from the fuel cell stack.

In the fuel cell system capable of adjusting a bypass flow rate according to the present invention, the bypass flow rate adjustment portion includes a thermal expansion material contracting in a first temperature range and expanding in a second temperature range greater than the first temperature range.

In the fuel cell system capable of adjusting a bypass flow rate according to the present invention, the bypass flow rate adjustment portion is formed in a ring shape on an inner wall of the bypass flow path.

In the fuel cell system capable of adjusting a bypass flow rate according to the the present invention, the bypass flow rate adjustment portion is inserted in a ring shape into an annular fixing groove formed on an inner wall of the bypass flow path.

In the fuel cell system capable of adjusting a bypass flow rate according to an embodiment of the present invention, the off-gas inflow flow path and the bypass flow path may be formed in the same direction.

In the fuel cell system capable of adjusting a bypass flow rate according to an embodiment of the present invention, the membrane humidifier includes a mid-case having an off-gas inlet connected to the off-gas inflow flow path, caps fastened to the mid-case, and a humidification module disposed inside the mid-case to accommodate a plurality of hollow fiber membranes.

In the fuel cell system capable of adjusting a bypass flow rate according to an embodiment of the present invention, the humidification module may include at least one cartridge including an inner case configured to accommodate a plurality of hollow fiber membranes and potting portions formed at ends of the inner case.

Other specific matters of implementation examples according to various aspects of the present invention are included in the detailed description below.

### Advantageous Effects

With the fuel cell system according to the embodiment of the present invention, it is possible for the bypass flow rate adjustment portion to automatically adjust the degree of opening of the bypass flow path depending on the temperature of the off-gas discharged from the fuel cell stack without additional parts such as valves. Therefore, it is possible to reduce a size and a manufacturing cost of the system due to a reduced number of parts of the overall system.

### Description of Drawings

FIG. 1 is a diagram illustrating a fuel cell system according to the related art.
FIG. 2 is a diagram illustrating a fuel cell system according to an embodiment of the present invention.
FIG. 3 is an enlarged view of a bypass flow rate adjustment portion of the fuel cell system according to the embodiment of the present invention.
FIG. 4 is a diagram illustrating an operating state of the bypass flow rate adjustment portion of FIG. 3 in a low output environment.
FIG. 5 is a diagram illustrating an operating state of the bypass flow rate adjustment portion of FIG. 3 in a high output environment.

### Mode for Disclosure

Since various changes may be made to the present invention, which may have several embodiments, specific embodiments will be illustrated and described in detail herein. However, it will be understood that this is not intended to limit the present invention to the specific embodiments.

The terms used herein are for the purpose of describing specific embodiments only and are not intended to limit the present invention. The singular expressions "a," "an" and "the" include the plural expressions, unless the context clearly indicates otherwise. It will be understood that the terms "include" or "have" herein specify the presence of features, numbers, steps, operations, components, parts or combinations thereof described herein, but do not preclude the presence or addition of one or more other features, numbers, steps, operations, components, parts or combinations thereof. Hereinafter, a fuel cell system according to embodiments of the present invention will be described with reference to the drawings.

FIG. 2 is a diagram illustrating a fuel cell system capable of adjusting a bypass flow rate (hereinafter referred to as a "fuel cell system") according to an embodiment of the present invention.

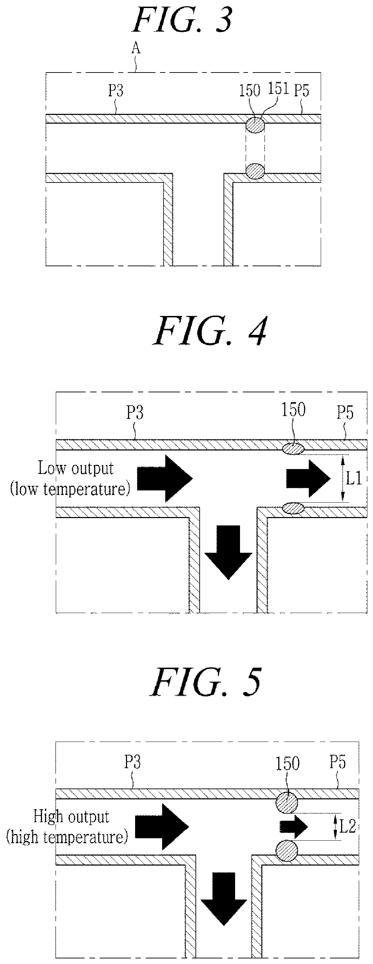

As illustrated in FIG. 2, the fuel cell system according to an embodiment of the present invention includes a blower B, a membrane humidifier 100, a fuel cell stack S, flow paths P1 to P5 that connect these, and a bypass flow rate adjustment portion 150 (see FIG. 3).

P1 denotes a dry gas supply flow path that connects the blower B to the membrane humidifier 100, and P2 denotes a stack flow path that connects the membrane humidifier 100 to the fuel cell stack S and supplies a humidified dry gas. P3 denotes an off-gas inflow flow path that supplies an off-gas discharged from the fuel cell stack S to the membrane humidifier 100, and P4 denotes an off-gas discharge flow path that discharges the off-gas flowing into the membrane humidifier 100 and performing moisture exchange to the outside. P5 denotes a bypass flow path that causes a part of the off-gas discharged from the fuel cell stack S to flow to the off-gas discharge flow path P4 by bypassing the membrane humidifier 100. Here, 'connect' includes not only "direct connection", but also "indirect connection with another part interposed therebetween".

The blower B collects air in an atmosphere and supplies the air to the membrane humidifier 100. An output magnitude of the blower B may be determined depending on an output magnitude of the fuel cell stack S. Optionally, a filter (not illustrated) that removes fine dust may be installed before the blower B, and a cooler (not illustrated) that cools a dry gas supplied to the membrane humidifier 100 may be installed between the blower B and the membrane humidifier 100.

The membrane humidifier 100 humidifies the dry gas and supplies the dry gas to the fuel cell stack S. The membrane humidifier 100 includes a humidification module 110 that humidifies the dry gas supplied from the blower B with moisture in an off-gas discharged from the fuel cell stack S. Both ends of the humidification module 110 are coupled to caps 120 (120a and 120b). The humidification module 110 and the cap 120 may be separately formed or may be integrally formed.

A dry gas inlet 130 is formed in the one cap 120a between the caps 120 to supply the dry gas supplied from the blower B to the humidification module 110, and a dry gas outlet 140 is formed in the other one cap 120b to supply air humidified by the humidification module 110 to the fuel cell stack S.

The dry gas inlet 130 may be connected to a dry gas supply flow path P1 that connects the blower B to the membrane humidifier 10. The dry gas outlet 140 may be connected to a stack flow path P3 that connects the membrane humidifier 10 and the fuel cell stack S.

The humidification module 110 is a device in which moisture exchange between the dry gas supplied from the blower B and the off-gas occurs, and includes a mid-case 111 having an off-gas inlet 111a and an off-gas outlet 111b, and a plurality of hollow fiber membranes 112 in the mid-case 111. Both ends of a bundle of hollow fiber membranes 112 are fixed to potting portions 113.

Alternatively, the humidification module 110 may include at least one cartridge including the plurality of hollow fiber membranes 112 and the potting portions 113 that fix the hollow fiber membranes 112 to each other. In this case, the hollow fiber membranes 112 and the potting portions 113 may be formed in a separate cartridge case (an inner case). In this case, the hollow fiber membranes 112 may be accommodated in the inner case, and the potting portions 113 may be formed at ends of the inner case. When the humidification module 110 includes the cartridge, a resin layer for fixing the cartridge may be formed between both ends of the cartridge and the mid-case 111, or a gasket assembly for airtight coupling through a mechanical assembly may be further included.

The mid-case 111 and the cap 120 may be independently formed of hard plastic or metal, and may have a circular or polygonal cross section in a width direction. The "circular" include oval, and "polygonal" includes polygonal with rounded corners. Examples of the hard plastic may include polycarbonate, polyamide (PA), polyphthalamide (PPA), and polypropylene (PP).

The hollow fiber membranes 112 may include a polymer membrane formed of a polysulfone resin, a polyethersulfone resin, a sulfonated polysulfone resin, a polyvinylidene fluoride (PVDF) resin, a polyacrylonitrile (PAN) resin, a polyimide resin, a polyamideimide resin, a polyesterimide resin, or a mixture of two or more of these, and the potting portions 113 may be formed by curing a liquid resin such as a liquid polyurethane resin through a casting scheme such as deep potting or centrifugal potting.

The dry gas supplied from the blower B flows along hollows of the hollow fiber membranes 112. The off-gas flowing into the mid-case 111 through the off-gas inlet 111a comes into contact with outer surfaces of the hollow fiber membranes 112 and then is discharged from the mid-case 111 through the off-gas outlet 111b. When the off-gas contacts the outer surfaces of the hollow fiber membranes 112, moisture contained in the off-gas permeates the hollow fiber membranes 112 to humidify the dry air flowing along the hollows of the hollow fiber membranes 112.

Meanwhile, a flow rate of a part of the off-gas discharged from the fuel cell stack S and supplied to the membrane humidifier 10 can be adjusted by the bypass flow rate adjustment portion 150 that adjusts a degree of opening of the bypass flow path P5 depending on a temperature of the off-gas discharged from the fuel cell stack S. A degree of opening and closing of the bypass flow rate adjustment portion 150 may be automatically adjusted depending on the temperature of the off-gas without a separate additional component. Therefore, it is possible to reduce a size and a manufacturing cost of the system due to a reduced number of parts of the overall system. This bypass flow rate adjustment portion 150 will be described in detail with reference to FIG. 3.

FIG. 3 is a view illustrating the bypass flow rate adjustment portion 150 of the fuel cell system according to present invention, and is an enlarged view of a part "A" in FIG. 2.

As illustrated in FIG. 3, the bypass flow rate adjustment portion 150 is formed in the bypass flow path P5 to adjust the degree of opening of the bypass flow path P5 depending on the temperature of the off-gas discharged from the fuel cell stack S. The bypass flow path P5 is connected to the off-gas inflow flow path P3. Further, the off-gas inflow flow path P3 is connected to the off-gas inlet 111a. The off-gas inflow flow path P3 and the off-gas inlet 111a may be formed at a predetermined angle, such as a right angle.

The bypass flow rate adjustment portion 150 is formed on an inner wall of the bypass flow path P5. An is annular fixing groove 151 is formed on the inner wall of the bypass flow path P5, and the bypass flow rate adjustment portion 150 is formed in a ring shape and inserted into and fixed to the annular fixing groove 151.

The bypass flow rate adjustment portion 150 is made of a material that thermally expands depending on the temperature of the off-gas. Specifically, the bypass flow rate adjustment portion 150 includes a thermal expansion material that contracts in a first temperature range and expands in a second temperature range greater than the first temperature range. That is, the bypass flow rate adjustment portion 150 includes a thermal expansion material that contracts at a low temperature and expands at a high temperature.

The off-gas inflow flow path P3 and the bypass flow path P5 are preferably formed in the same direction. When the off-gas inflow flow path P3 and the bypass flow path P5 are formed in the same direction, the bypass flow rate adjustment portion 150 faces a direction in which the off-gas flows, and thus, the contraction or expansion depending on a temperature can be effectively performed.

The off-gas flowing through the off-gas inflow flow path P3 is distributed to the off-gas inlet 111a and the bypass flow path P5. In this case, an amount of the off-gas supplied to the membrane humidifier 100 through the off-gas inlet 111a is determined depending on an amount of the off-gas flowing through the bypass flow path P5. A flow rate of the off-gas flowing through the bypass flow path P5 is determined by the bypass flow rate adjustment portion 150. This will be described with reference to FIGS. 4 and 5.

FIG. 4 is a diagram illustrating an operating state of the bypass flow rate adjustment portion 150 in a low output environment. When the output of the fuel cell stack S is generally lower than 40 kW, this can be referred to as a low output environment. In the low output environment, a relatively low temperature off-gas is supplied from the fuel cell stack S. Here, the low temperature may be in a first temperature range lower than about 50°C.

Since the off-gas is at a low temperature, the bypass flow rate adjustment portion 150 relatively contracts so that an opening diameter of the bypass flow path P5 becomes L1. Therefore, a relatively large amount of off-gas flows through the bypass flow path P5 as compared with a high output environment, and a relatively small amount of low temperature off-gas is supplied to the membrane humidifier 100.

FIG. 5 is a diagram illustrating an operating state of the bypass flow rate adjustment portion 150 in a high output environment. When the output of the fuel cell stack S is generally equal to or higher than 40 kW, this can be referred to as a high output environment. In the high output environment, a relatively high temperature off-gas is supplied from the fuel cell stack S. Here, the high temperature may be in a range of about 50 to 150 °C and may be a second temperature range greater than the first temperature range.

Since the off-gas is at a high temperature, the bypass flow rate adjustment portion 150 expands and the opening diameter of the bypass flow path P5 becomes L2 smaller than L1. Therefore, a relatively small amount of dry off-flows through the bypass flow path P5 as compared with the low output environment, and a relatively large amount of high temperature off-gas is supplied to the membrane humidifier 100.

In the fuel cell system according to the embodiment of the present invention as described above, it is possible for the bypass flow rate adjustment portion 150 to automatically adjust the degree of opening of the bypass flow path P5 depending on the temperature of the off-gas discharged from the fuel cell stack S without additional parts such as valves. Therefore, it is possible to reduce a size and a manufacturing cost of the system due to a reduced number of parts of the overall system.

### [Detailed Description of Main Elements]

| | | | |
|---|---|---|---|
| 100: | fuel cell membrane humidifier | 110: | humidification module |
| 111a: | off-gas inlet | 111b: | off-gas outlet |
| 120: | cap | 150: | bypass flow rate adjustment portion |
| B: | blower | S: | fuel cell stack |
| P1: | dry gas supply flow path | P2: | stack flow path |
| P3: | off-gas inflow flow path | P4: | off-gas discharge flow path |
| P: | bypass flow path | | |

## Claims

1. A fuel cell system capable of adjusting a bypass flow rate comprising:
a fuel cell stack (S) from which an off-gas is discharged;
a membrane humidifier (100) comprising:
a mid-case (111) having an off-gas inlet (111a) connected to an off-gas inflow flow path (P3) and an off-gas outlet (111b),
caps (120a, 120b) fastened to the mid-case (111), and
a humidification module (110) disposed inside the mid-case (111) configured to accommodate a plurality of hollow fiber membranes (112) fixed by potting portions (113);
the off-gas inflow flow path (P3) configured to supply at least a part of an off-gas discharged from the fuel cell stack (S) to the off-gas inlet (111a) of the membrane humidifier (100);
an off-gas discharge flow path (P4) configured to discharge the off-gas flowing into the membrane humidifier (100) and performing moisture exchange to the outside;
a bypass flow path (P5) configured to cause at least a part of the off-gas discharged from the fuel cell stack (S) to flow to the off-gas discharge flow path (P4) by bypassing the membrane humidifier (100); and
a bypass flow rate adjustment portion (150) formed in the bypass flow path (P5) and config ured to adjust a degree of opening of the bypass flow path (P5) depending on a temperature o f the off-gas discharged from the fuel cell stack (S),
wherein a dry gas inlet (130) is formed in the one cap (120a) between the caps (120) to supply the dry gas supplied from a blower (B) to the humidification module (110), and a dry gas outlet (140) is formed in the other one cap (120b) to supply air humidified by the humidification module (110) to the fuel cell stack (S),
wherein the bypass flow rate adjustment portion (150) comprises a thermal expansion material that contracts in a first temperature range and expands in a second temperature range greater than the first temperature range, and
wherein the bypass flow rate adjustment portion (150) is inserted in a ring shape into an annular fixing groove (151) formed on an inner wall of the bypass flow path (P5).

2. The fuel cell system capable of adjusting a bypass flow rate of claim 1, wherein the off-gas inflow flow path (P3) and the bypass flow path (P5) are formed in the same direction.

3. The fuel cell system capable of adjusting a bypass flow rate of claim 1, wherein the humidification module (110) includes at least one cartridge including an inner case configured to accommodate the plurality of hollow fiber membranes (112) and potting portions (113) formed at ends of the inner case.

## Patentansprüche

1. Brennstoffzellensystem, das in der Lage ist, eine Bypass-Durchflussrate anzupassen, aufweisend:
einen Brennstoffzellen-Stack (S), aus dem ein Abgas ausgeleitet wird;
einen Membran-Befeuchter (100), welcher aufweist:
ein Mittelgehäuse (111) mit einem Abgas-Einlass (111a), der mit einem Abgas-Einströmweg (P3) verbunden ist, und einem Abgas-Auslass (111b),
Kappen (120a, 120b), die an dem Mittelgehäuse (111) befestigt sind, und
ein Befeuchtungsmodul (110), das innerhalb des Mittelgehäuses (111) angeordnet ist und derart konfiguriert ist, dass es eine Vielzahl von Hohlfasermembranen (112) aufnehmen kann, die durch Vergussabschnitte (113) fixiert sind;
wobei der Abgas-Einströmweg (P3) derart konfiguriert ist, dass er zumindest einen Teil des aus dem Brennstoffzellen-Stack (S) ausgeleiteten Abgases dem Abgas-Einlass (111a) des Membran-Befeuchters (100) zuführt;
einen Abgasauslass-Strömungsweg (P4), welcher derart konfiguriert ist, dass er das in den Membran-Befeuchter (100) strömende Abgas ausleitet und einen Feuchtigkeitsaustausch nach außen durchführt;
einen Bypass-Strömungsweg (P5), welcher derart konfiguriert ist, dass er zumindest einen Teil des aus dem Brennstoffzellen-Stack (S) ausgeleiteten Abgases unter Umgehung des Membran-Befeuchters (100) zu dem Abgasauslass-Strömungsweg (P4) strömen lässt; und
einen Bypass-Durchflussmengen-Einstellabschnitt (150), der in dem Bypass-Strömungsweg (P5) ausgebildet und derart konfiguriert ist, dass er einen Öffnungsgrad des Bypass-Strömungswegs (P5) in Abhängigkeit von einer Temperatur des aus dem Brennstoffzellen-Stack (S) ausgeleiteten Abgases einstellt,
wobei ein Trockengaseinlass (130) in der einen Kappe (120a) zwischen den Kappen (120) ausgebildet ist, um das von einem Gebläse (B) zugeführte Trockengas dem Befeuchtungsmodul (110) zuzuführen, und ein Trockengasauslass (140) in der anderen Kappe (120b) ausgebildet ist, um die durch das Befeuchtungsmodul (110) befeuchtete Luft dem Brennstoffzellen-Stack (S) zuzuführen,
wobei der Bypass-Durchflussmengen-Einstellabschnitt (150) ein thermisches Ausdehnungsmaterial umfasst, das sich in einem ersten Temperaturbereich zusammenzieht und in einem zweiten Temperaturbereich, der größer ist als der erste Temperaturbereich, ausdehnt, und
wobei der Bypass-Durchflussmengen-Einstellabschnitt (150) ringförmig in eine ringförmige Befestigungsnut (151) eingesetzt ist, die an einer Innenwand des Bypass-Strömungswegs (P5) ausgebildet ist.

2. Brennstoffzellensystem, das in der Lage ist, eine Bypass-Durchflussrate gemäß Anspruch 1 einzustellen, wobei der Abgas-Einströmweg (P3) und der Bypass-Durchflussweg (P5) in derselben Richtung ausgebildet sind.

3. Brennstoffzellensystem, das in der Lage ist, eine Bypass-Durchflussrate gemäß Anspruch 1 anzupassen, wobei das Befeuchtungsmodul (110) zumindest eine Kartusche umfasst, die ein Innengehäuse umfasst, welches derart konfiguriert ist, dass es die Vielzahl von Hohlfasermembranen (112) und Vergussabschnitte (113) aufnimmt, die an den Enden des Innengehäuses ausgebildet sind.

## Revendications

1. Système de pile à combustible capable d'ajuster un débit de dérivation comprenant :
un empilement (S) de piles à combustible duquel est déchargé un effluent gazeux ;
un humidificateur de membrane (100) comprenant :
un boîtier médian (111) ayant une entrée d'effluent gazeux (111a) raccordée à une trajectoire d'écoulement d'entrée d'effluent gazeux (P3) et une sortie d'effluent gazeux (111b),
des capuchons (120a, 120b) fixés au boîtier médian (111), et
un module d'humidification (110) disposé à l'intérieur du boîtier médian (111) configuré pour loger une pluralité de membranes à fibres creuses (112) fixées par des parties d'enrobage (113) ;
la trajectoire d'écoulement d'entrée d'effluent gazeux (P3) configurée pour fournir au moins une partie d'un effluent gazeux déchargé de l'empilement (S) de piles à combustible, à l'entrée d'effluent gazeux (111a) de l'humidificateur de membrane (100) ;
une trajectoire d'écoulement de décharge d'effluent gazeux (P4) configurée pour décharger l'effluent gazeux s'écoulant dans l'humidificateur de membrane (100) et réalisant l'échange d'humidité avec l'extérieur ;
une trajectoire d'écoulement de dérivation (P5) configurée pour amener au moins une partie de l'effluent gazeux déchargé de l'empilement (S) de piles à combustible à s'écouler vers la trajectoire d'écoulement de décharge d'effluent gazeux (P4) en contournant l'humidificateur de membrane (100) ; et
une partie d'ajustement de débit de dérivation (150) formée dans la trajectoire d'écoulement de dérivation (P5) et configurée pour ajuster un degré d'ouverture de la trajectoire d'écoulement de dérivation (P5) en fonction d'une température de l'effluent gazeux déchargé de l'empilement (S) de piles à combustible,
dans lequel une entrée de gaz sec (130) est formée dans le un capuchon (120a) entre les capuchons (120) pour fournir le gaz sec alimenté à partir d'une soufflante (B) au module d'humidification (110), et une sortie de gaz sec (140) est formée dans l'autre capuchon (120b) pour fournir l'air humidifié par le module d'humidification (110) à l'empilement (S) de piles à combustible,
dans lequel la partie d'ajustement de débit de dérivation (150) comprend un matériau d'expansion thermique qui se contracte dans une première plage de température et se dilate dans une deuxième plage de température supérieure à la première plage de température, et
dans lequel la partie d'ajustement de débit de dérivation (150) est insérée dans une forme annulaire dans une rainure de fixation annulaire (151) formée sur une paroi interne de la trajectoire d'écoulement de dérivation (P5).

2. Système de pile à combustible capable d'ajuster un débit de dérivation selon la revendication 1, dans lequel la trajectoire d'écoulement d'entrée d'effluent gazeux (P3) et la trajectoire d'écoulement de dérivation (P5) sont formées dans la même direction.

3. Système de pile à combustible capable d'ajuster un débit de dérivation selon la revendication 1, dans lequel le module d'humidification (110) comprend au moins une cartouche comprenant un boîtier interne configuré pour loger la pluralité de membranes à fibres creuses (112) et les parties d'enrobage (113) formées aux extrémités du boîtier interne.
